# EUROPEAN PATENT SPECIFICATION

(11) **EP 0 816 296 B1**
(45) Date of publication and mention of the grant of the patent: **28.02.2001**
(21) Application number: 97110335.3
(22) Date of filing: 25.06.1997
(51) Int. Cl.: C03C 4/02, C03C 4/08, C03C 3/087

(54) **Green privacy glass**
Grünes Vertraulichkeitsglas
Verre vert pour la confidentialité

(30) Priority: 02.07.1996 US 21034 P; 04.06.1997 US 869221
(43) Date of publication of application: 07.01.1998
(60) Divisional application: 99105036.0
(73) Proprietor: PPG Industries Ohio, Inc., Cleveland, OH 44111 (US)
(72) Inventor: Shelestak, Larry J., Bairdford, Pennsylvania 15006 (US); Heithoff, Robert B., Gibsonia, Pennsylvania 15044 (US); Calabrese, Andrew, Wexford, Pennsylvania 15090 (US); Krumwiede, John F., Cheswick, Pennsylvania 15024 (US); Longobardo, Anthony V., Butler, Pennsylvania 16001 (US)
(74) Representative: Sternagel, Hans-Günther, Dr.

(56) References cited:
- EP-A- 0 536 049
- EP-A- 0 653 388
- EP-A- 0 705 800
- EP-A- 0 798 271
- EP-A- 0 802 168
- DE-A- 19 636 303
- GB-A- 2 289 273
- US-A- 4 104 076
- US-A- 5 023 210

## Description

The invention refers to a green colored, infrared and ultraviolet absorbing glass having a base glass portion and a solar radiation absorbing colorant portion to control the luminous transmittance (LTA), ultraviolet transmittance (TSUV), total solar infrared transmittance (TSIR) and the total solar energy transmittance (TSET).

This invention relates particularly to a tinted, green colored soda-lime-silica glass having a low luminous transmittance that makes it highly desirable for use as a privacy glazing in vehicles, such as the side and rear windows in vans. In particular, the glass has a luminous transmittance of 60 percent or less, preferably between 10 to 40 percent. As used herein, the term "green colored" is meant to include glasses that have a dominant wavelength of 480 to 565 nanometers (nm) and may be characterized as green blue, green yellow or green gray in color. In addition, the glass of the present invention generally exhibits lower infrared and ultraviolet radiation transmittance when compared to typical green glasses used in automotive applications. The glass is also compatible with float glass manufacturing methods.

Various dark tinted, infrared and ultraviolet radiation absorbing glass compositions are known in the art. The primary colorant in typical dark tinted automotive privacy glasses is iron, which is usually present in both the Fe₂O₃ and FeO forms. Some glasses use cobalt, selenium and, optionally, nickel in combination with iron to further control infrared and ultraviolet radiation and color, for example as disclosed in EP-A-653 388, U.S.-A-4,873,206 to Jones; 5,278,108 to Cheng et al.; 5,308,805 to Baker et al.; and 5,393,593 to Gulotta et al., and EP-A-0 705 800. Others also include chromium with this combination of colorants as disclosed in GB-A-2 289 273, U.S.-A-4,104,076 to Pons; 4,339,541 to Dela Ruye; 5,023,210 to Krumwiede et al; and 5,352,640 to Combes et al.; EP-A-0 536 049; FR-A-2,331,527 and CA-A-2,148,954. Still, other glasses may include additional materials, such as disclosed in WO 96/00194, which teaches the inclusion of fluorine, zirconium, zinc, cerium, titanium and copper in the glass composition and requires that the sum of the alkaline earth oxides be less than 10 wt.% of the glass.

EP-A-802 168, which is a document under Art.54(3) and (4) EPC, describes a substantially nickel-free soda-lime glass composition having as colorants: 1.10 - 1.28 % total iron oxide, 0.22 - 0.33 % FeO, 180 - 250 ppm Co₃O₄, 22 -40 ppm Se and 100 - 400 ppm Cr₂O₃ resulting in glasses having a luminous transmittance from 17.3 to 23.76 %, UV transmittance from 8.26 to 11.93 %, IR transmittance from 9.67 to 19.26 %, total solar transmittance from 13.87 to 22.07 % and a dominant wavelength from 494.07 to 567.56 nm and an excitation purity from 2.56 to 10.90. EP-A-798 271, which is a document under Art. 54(3) and (4) EPC, describes a dark gray colored soda-lime glass composition having as colorants 0.8 - 1.5 % total iron oxide, 0.1 - 0.3 % FeO, 200 -500 ppm CoO, 5 - 150 ppm Se, 20 - 500 ppm Cr₂O₃ and 0 - 1 % TiO₂ resulting in a glass having luminous transmittance from 1.1 - 16.4 %, UV transmittance from 0.1 - 7.2%, total solar transmittance from 6.8 - 17.3 %, a dominant wavelength from 492.4 to 569.3 nm and an excitation purity from 0.3 - 6.7.

It is the object of the invention to provide a green privacy glass which has the color shifted toward yellow and has also absorbance of UV-radiation.

This object is attained by a green colored, infrared and ultraviolet radiation absorbing glass article having a composition comprising a base glass portion comprising:

| | |
|---|---|
| SiO₂ | 66 to 75 percent by weight, |
| Na₂O | 10 to 20 percent by weight, |
| CaO | 5 to 15 percent by weight, |
| MgO | 0 to 5 percent by weight, |
| Al₂O₃ | 0 to 5 percent by weight, |
| K₂O | 0 to 5 percent by weight, |

and a solar radiation absorbing and colorant portion consisting essentially of:

| | |
|---|---|
| total iron | 0.9 to 1.3 percent by weight, |
| FeO | 0.25 to 0.40 percent by weight, |
| CoO | 80 to 130 PPM, |
| Se | 8 to 15 PPM, |
| Cr₂O₃ | 0.0250 to 0.0350 percent by weight, and |
| TiO₂ | 0.1 to 0.5 percent by weight, |

the glass having a luminous transmittance (LTA) of 25 to 40 percent at least one thickness in the range of 1.8 to 5.0 mm.

This object is also attained by a green colored, infrared and ultraviolet radiation absorbing glass article having a composition comprising a base glass portion comprising:

| | |
|---|---|
| SiO₂ | 66 to 75 percent by weight, |
| Na₂O | 10 to 20 percent by weight, |
| CaO | 5 to 15 percent by weight, |
| MgO | 0 to 5 percent by weight, |
| Al₂O₃ | 0 to 5 percent by weight, |
| K₂O | 0 to 5 percent by weight, |

and a solar radiation absorbing and colorant portion comprising Cr₂O₃ in which Cr₂O₃ is partially or completely replaced by V₂O₅ and further components may be present, so that the solar radiation and colorant portion consists essentially of:

| | |
|---|---|
| total iron | 0.6 to 4 percent by weight, |
| FeO | 0.13 to 0.9 percent by weight, |
| CoO | 40 to 500 PPM, |
| Se | 5 to 70 PPM, |
| TiO₂ | 0.02 to 1 percent by weight, |
| Cr₂O₃ | 0 to 0.08 percent by weight, |
| V₂O₅ | 0.01 to 0.32 percent by weight, |
| MnO₂ | 0 to 0.5 percent by weight, |
| SnO₂ | 0 to 2 percent by weight, |
| ZnO | 0 to 0.5 percent by weight, |
| Mo | 0 to 0.015 percent by weight, |
| CeO₂ | 0 to 2 percent by weight, |
| NiO | 0 to 0.1 percent by weight, |

the glass having a luminous transmittance (LTA) of up to 60 percent at least one thickness in the range of 1.8 to 5.0 mm.

In producing infrared and ultraviolet radiation absorbing glasses, the relative amounts of iron and other additives must be closely monitored and controlled within an operating range to provide the desired color and spectral properties. The dark tinted green colored glass may be used as a privacy glazing for vehicles to complement the green colored glasses typically used in automobiles that exhibits superior solar performance properties and is compatible with commercial float glass manufacturing techniques.

The present invention provides a green colored, infrared and ultraviolet absorbing glass article having a luminous transmittance of up to 60 percent or of 25 to 40 % at at least one thickness in the range of 1.8 to 5.0 mm. Referred reference thicknesses for the spectral properties are between 3,91 mm and 4.06 mm. The composition of the glass article uses a standard soda-lime-silica glass base composition and additionally iron, cobalt, selenium, and chromium, and titanium, as infrared and ultraviolet radiation absorbing materials and colorants. The glasses of the present invention preferably have a color characterized by a dominant wavelength in the range of 480 to 565 nanometers, more preferably 485 to 515 nanometers, with an excitation purity of no higher than about 20%, preferably no higher than about 10%, and more preferably no higher than about 7%. The glass compositions may be provided with different levels of spectral performance depending on the particular application and desired luminous transmittance.

### DETAILED DESCRIPTION OF THE INVENTION

The base glass of the present invention, that is, the major constituents of the glass without infrared or ultraviolet absorbing materials and/or colorants, which are the object of the present invention, is commercial soda-lime-silica glass characterized as follows:

| | Weight Percent |
|---|---|
| SiO₂ | 66-75 |
| Na₂O | 10-20 |
| CaO | 5-15 |
| MgO | 0-5 |
| Al₂O₃ | 0-5 |
| K₂O | 0-5 |

As used herein, all "weight percent (wt.%)" values are based on the total weight of the final glass composition.

To this base glass, the present invention adds infrared and ultraviolet radiation absorbing materials and colorants in the form of iron, cobalt, selenium, chromium and titanium. As disclosed herein, iron is expressed in terms of Fe₂O₃ and FeO, cobalt is expressed in terms of CoO, selenium is expressed in terms of elemental Se, chromium is expressed in terms of Cr₂O₃ and titanium is expressed in terms of TiO₂. It should be appreciated that the glass compositions disclosed herein may include small amounts of other materials, for example melting and refining aids, tramp materials or impurities. It should be further appreciated that in one embodiment of the invention, small amounts of additional materials may be included in the glass to improve the solar performance of the glass as will be discussed later in more detail.

The iron oxides in a glass composition perform several functions. Ferric oxide, Fe₂O₃, is a strong ultraviolet radiation absorber and operates as a yellow colorant in the glass. Ferrous oxide, FeO, is a strong infrared radiation absorber and operates as a blue colorant. The total amount of iron present in the glasses disclosed herein is expressed in terms of Fe₂O₃ in accordance with standard analytical practice but that does not imply that all of the iron is actually in the form of Fe₂O₃. Likewise, the amount of iron in the ferrous state is reported as FeO, even though it may not actually be present in the glass as FeO. In order to reflect the relative amounts of ferrous and ferric iron in the glass compositions disclosed herein, the term "redox" shall mean the amount of iron in the ferrous state (expressed as FeO) divided by the amount of total iron (expressed as Fe₂O₃). Furthermore, unless stated otherwise, the term "total iron" in this specification shall mean total iron expressed in terms of Fe₂O₃ and the term "FeO" shall mean iron in the ferrous state expressed in terms of FeO.

Se is an ultraviolet and infrared radiation absorbing colorant that imparts a pink or brown color to soda-lime-silica glass. Se may also absorb some infrared radiation and its use tends to decrease redox. CoO operates as a blue colorant and does not exhibit any appreciable ultraviolet or infrared radiation absorbing properties. Cr₂O₃ imparts a green color to the glass and helps control the final glass color. It is believed that the chromium may also provide some ultraviolet radiation absorption. TiO₂ is an ultraviolet radiation absorber that operates as a colorant imparting a yellow color to the glass composition. A proper balance between the iron, i.e. ferric and ferrous oxides, chromium, selenium, cobalt and titanium content is required to obtain the desired green colored privacy glass with the desired spectral properties.

The glass of the present invention may be melted and refined in a continuous, large-scale, commercial melting operation and formed into flat glass sheets of varying thicknesses by the float method in which the molten glass is supported on a pool of molten metal, usually tin, as it assumes a ribbon shape and is cooled. It should be appreciated that as a result of forming the glass on molten tin, measurable amounts of tin oxide may migrate into surface portions of the glass on the side that was in contact with the tin. Typically, a piece of float glass has an SnO₂ concentration of at least 0.05 to 2 wt.% in the first 25 microns below the surface of the glass that was in contact with the tin. Typical background levels of SnO₂ may be as high as 30 parts per million (PPM).

The melting and forming arrangements used to produce the glass compositions of the present invention include, but are not limited to a conventional, overhead fired continuous melting operation, as is well known in the art, or a multi-stage melting operation, as disclosed in U.S.-A-4,381,934 to Kunkle et al.; 4,792,536 to Pecoraro et al. and 4,886,539 to Cerutti et al. If required, a stirring arrangement may be employed within the melting and/or forming stages of the glass production operation to homogenize the glass in order to produce glass of the highest optical quality.

Table 1 illustrates reference examples 1-72 of glass compositions falling outside the scope of the present invention.

Tables 2 and 3 illustrate examples 73-85 of glass compositions which embody the principles of the present invention. The examples in Tables 1 and 2 are computer modeled compositions generated by a glass color and spectral performance computer model developed by PPG Industries, Inc. The examples in Table 3 are actual experimental laboratory melts. The spectral properties shown for Tables 1 and 3 are based on a reference thickness of 4.06 mm (0.160 inches) and those in Table 2 are based on a reference thickness of 3.91 mm (0.154 inches). For comparison purposes, the spectral properties of the examples may be approximated at different thicknesses using the formulas disclosed in U.S.-A-4,792,536. Only the iron, cobalt, selenium, chromium and titanium portions of the examples are listed in the tables. With respect to the transmittance data provided in the tables, the luminous transmittance (LTA) is measured using C.I.E. standard illuminant "A" with a 2° observer over the wavelength range 380 to 770 nanometers and glass color, in terms of dominant wavelength and excitation purity, is measured using C.I.E. standard illuminant "C" with a 2° observer, following the procedures established in ASTM E308-90. The total solar ultraviolet transmittance (TSUV ) is measured over the wavelength range 300 to 400 nanometers, total solar infrared transmittance (TSIR) is measured over the wavelength range 720 to 2000 nanometers, and total solar energy transmittance (TSET) is measured over the wavelength range 300 to 2000 nanometers. The TSUV, TSIR and TSET transmittance data are calculated using Parry Moon air mass 2.0 direct solar irradiance data and integrated using the Trapezoidal Rule, as is known in the art.

The optical properties reported in Tables 1 and 2 are the expected properties of a glass having a base glass composition and colorants, generally as discussed herein, based upon the absorption coefficients of the glass' constituents, assuming that the glass is homogeneous throughout and is manufactured by a conventional float glass process, as is well known in the art.

The information provided in Table 3 is based on experimental laboratory melts having approximately the following batch components:

| | |
|---|---|
| cullet A | 125 gm |
| cullet B | 22.32 gm |
| cullet C | 8.93 gm |
| rouge | 0.32 gm |
| Cr₂O₃ | 0.0461 gm |
| TiO₂ | 0.3-0.6 gm |
| Se | 0.0037-0.0073 gm |
| graphite | 0.015 gm |

The cullets used in the melts included varying amounts of iron, cobalt, selenium, chromium and/or titanium. More specifically, cullet A included 0.811 wt.% total iron, 0.212 wt.% FeO, 101 PPM CoO, 17 PPM Se, 8 PPM Cr₂O₃, and 0.02 wt.% TiO₂. Cullet B included 1.417 wt.% total iron, 0.362 wt.% FeO, 211.25 PPM CoO, 25 PPM Se, and 7.5 PPM Cr₂O₃. Cullet C included 0.93 wt.% total iron, 0.24 wt.% FeO, 6 PPM Cr₂O₃, and 0.02 wt.% TiO₂. In preparing the melts, the ingredients were weighed out and mixed. It is believed that the material was then placed in a 4-inch platinum crucible and heated to 1427°C (2600°F) for 30 minutes and then heated to 1454°C (2650°F) for 1 hour. Next, the molten glass was fritted in water, dried, put in a 2-inch platinum crucible and reheated at 1454°C (2650°F) for at least 1 hour. The molten glass was then poured out of the crucible to form a slab and annealed. Samples were cut from the slab and ground and polished for analysis. The chemical analysis of the glass compositions was determined using a RIGAKU 3370 X-ray fluorescence spectrophotometer. The FeO content was determined using wet chemistry techniques, as is well known in the art. The spectral characteristics of the glass were determined on annealed samples using a Perkin-Elmer Lambda 9 UV/VIS/NIR spectrophotometer prior to tempering the glass or prolonged exposure to ultraviolet radiation, which will effect the spectral properties of the glass.

The following is representative of the basic oxides of the particular experimental melts disclosed in Table 3, which also fall within the base glass composition discussed earlier:

| | |
|---|---|
| SiO₂ | 70-72 wt.% |
| Na₂O | 12-14 wt.% |
| CaO | 8-10 wt.% |
| MgO | 3-4 wt.% |
| Al₂O₃ | 0.1-0.6 wt.% |
| K₂O | 0.01-0.15 wt.% |

The analysis of these melts also showed that the glasses included about 0.081 wt.% MnO₂. It is presumed that the MnO₂ entered into the glass melt as part of the cullet.

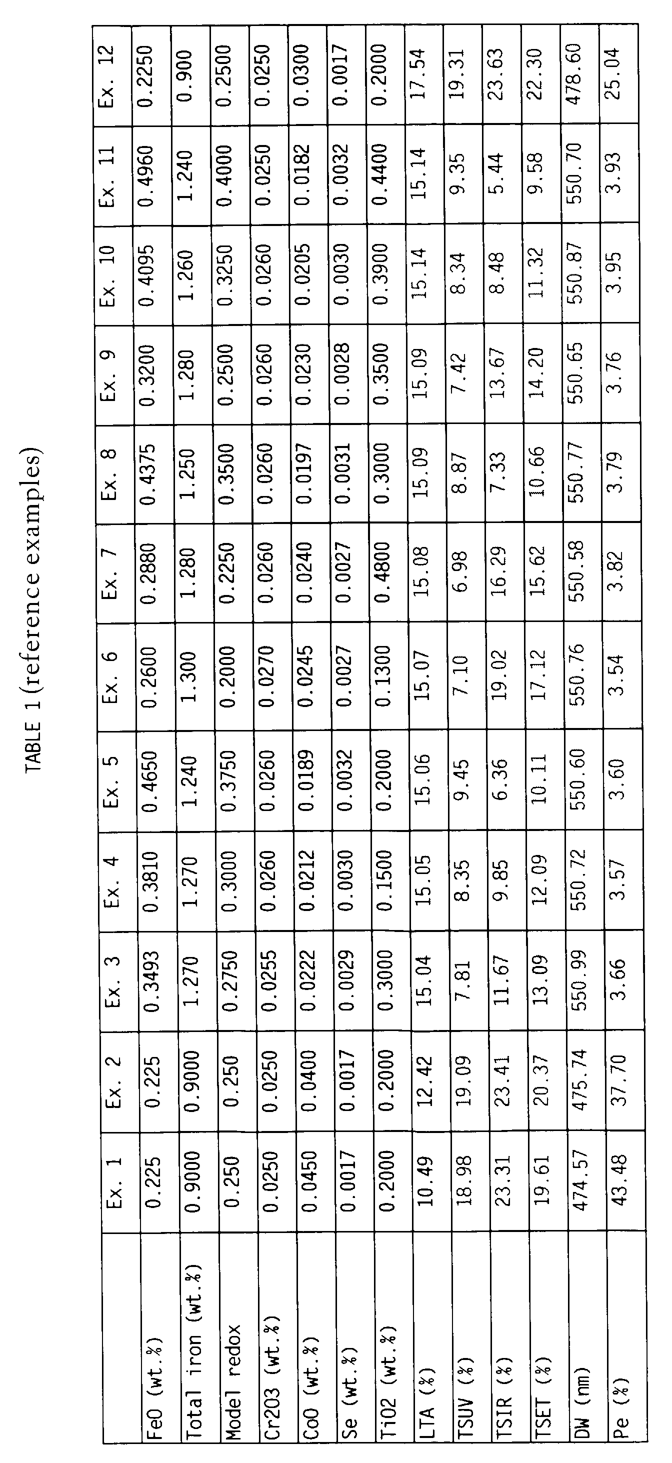

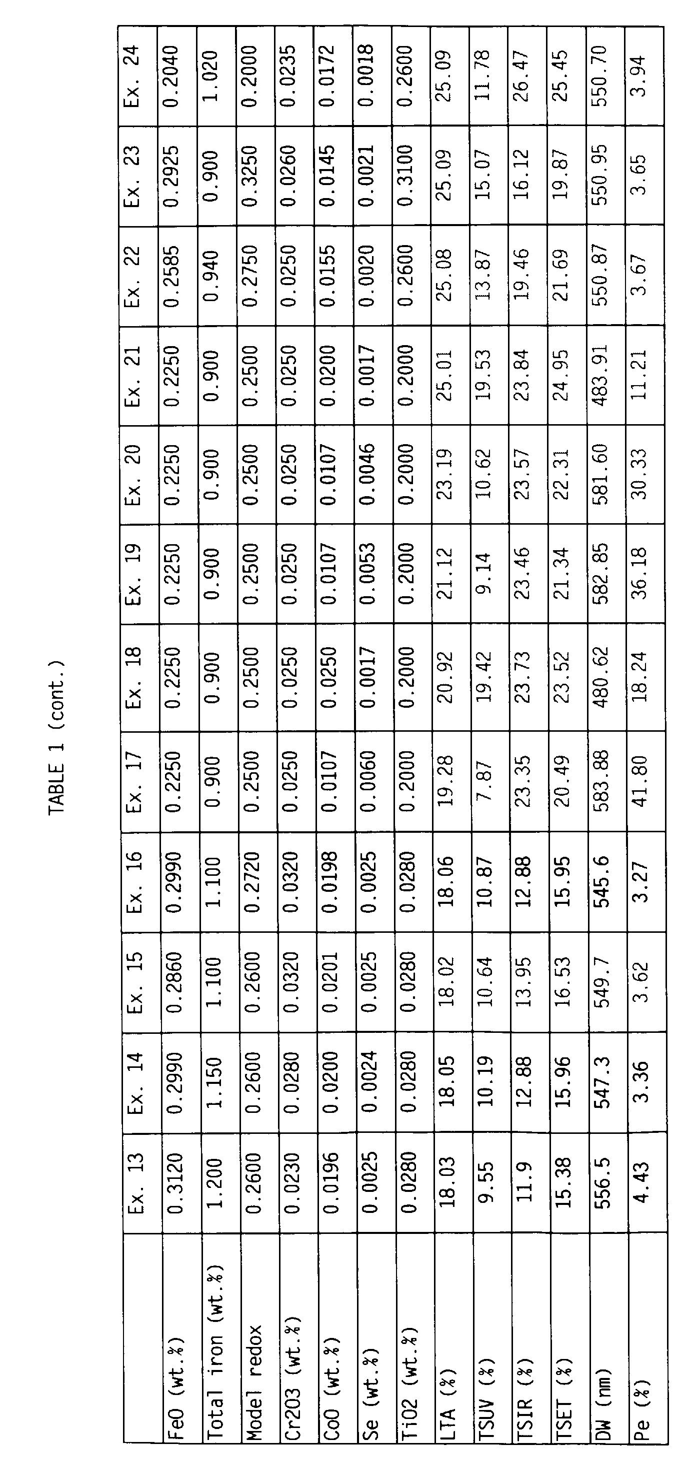

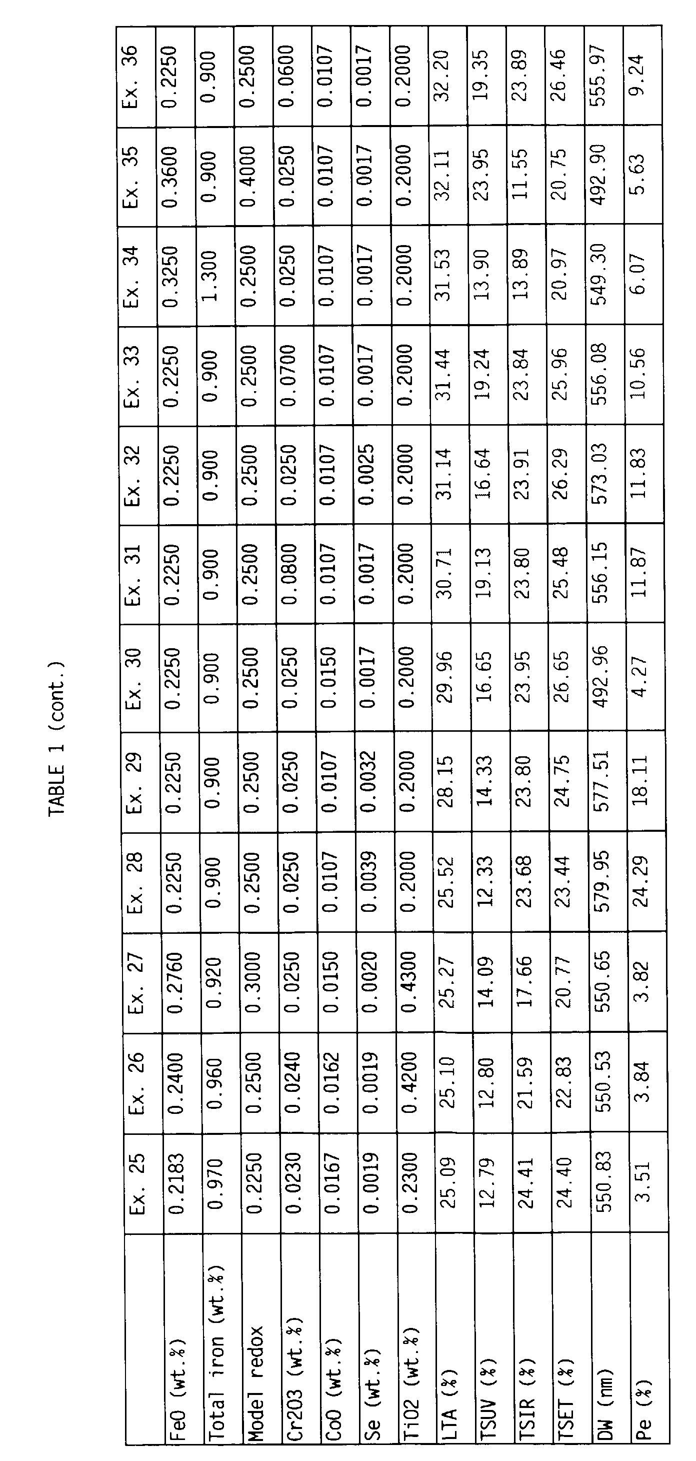

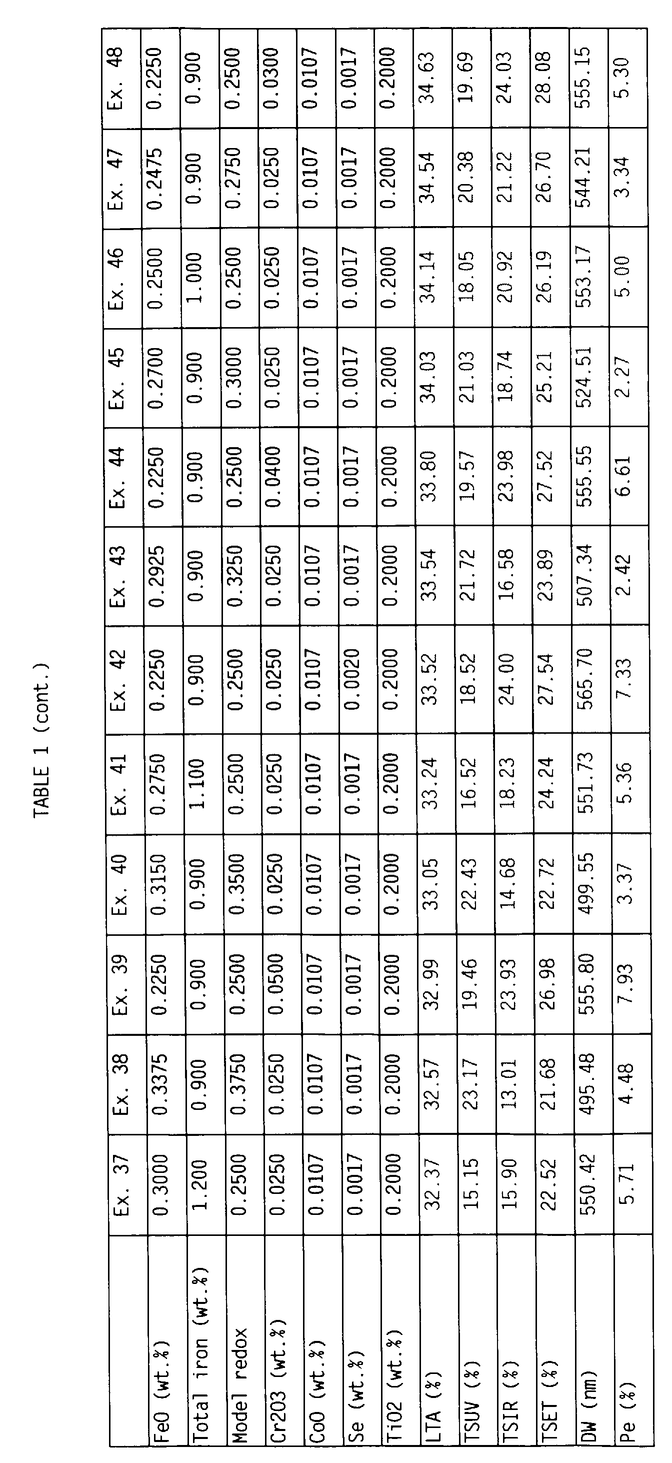

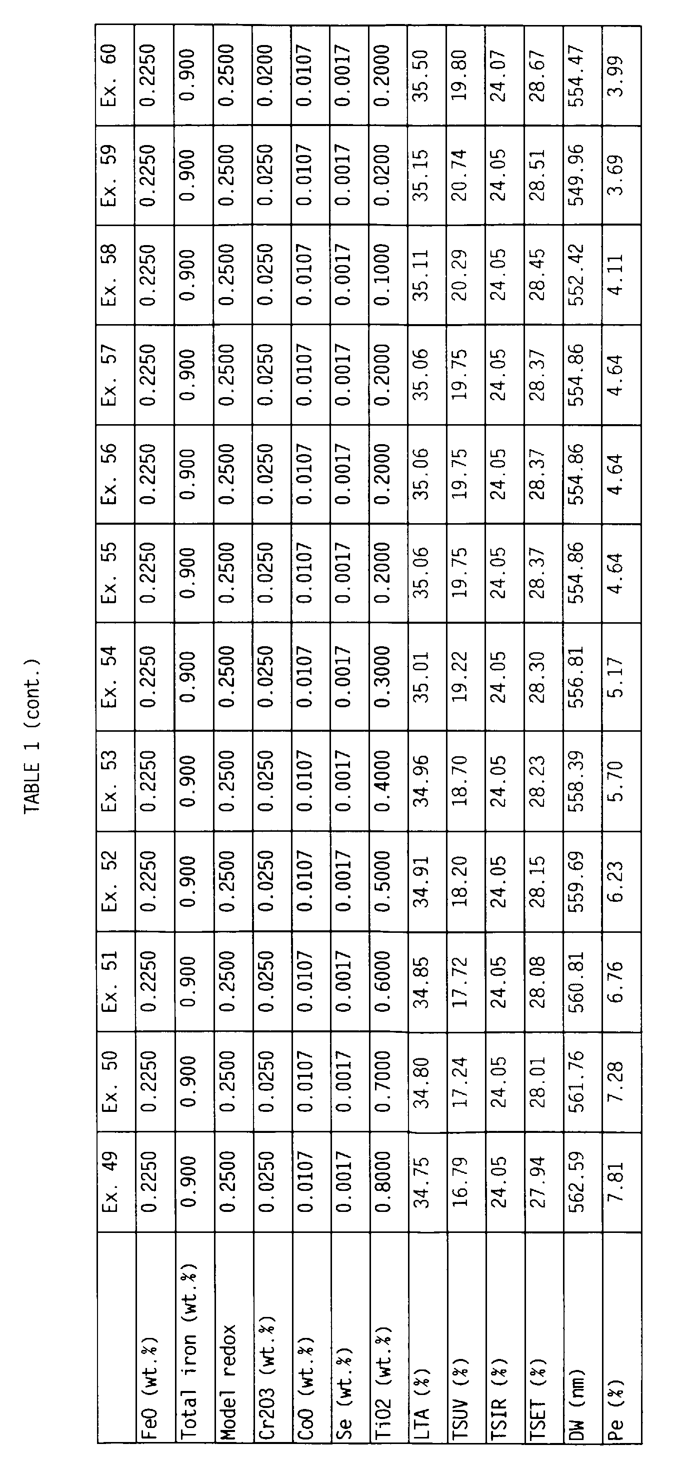

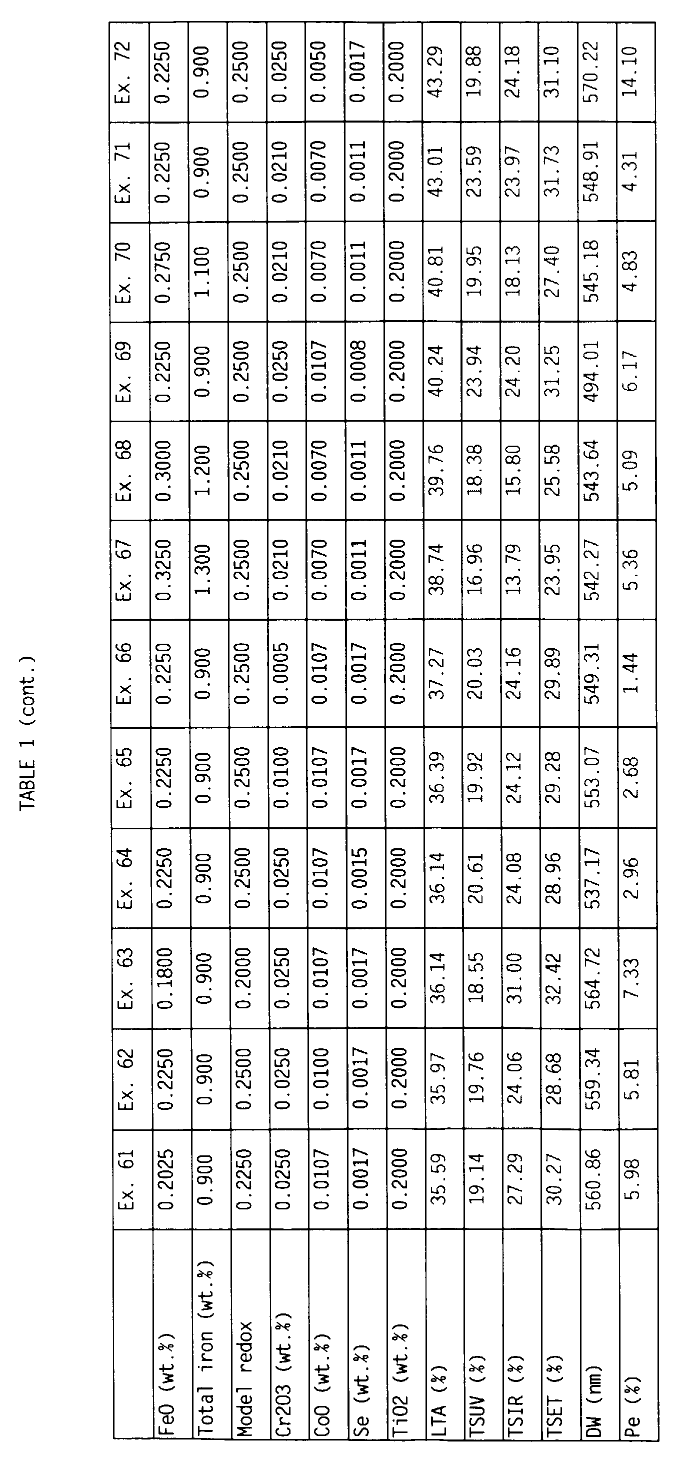

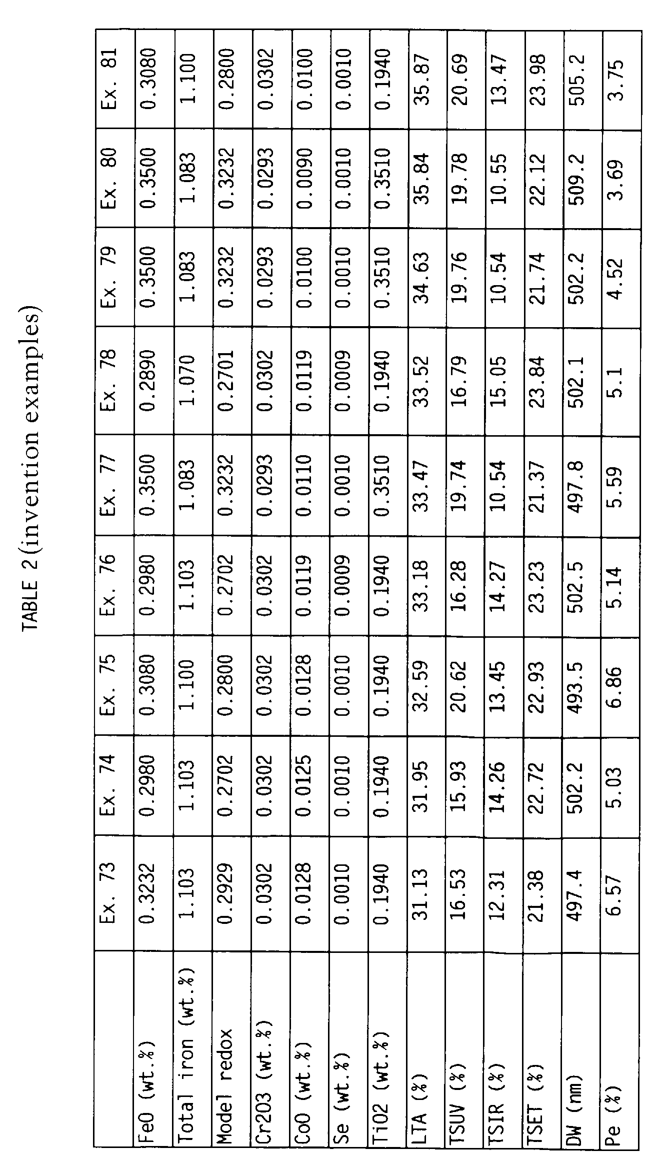

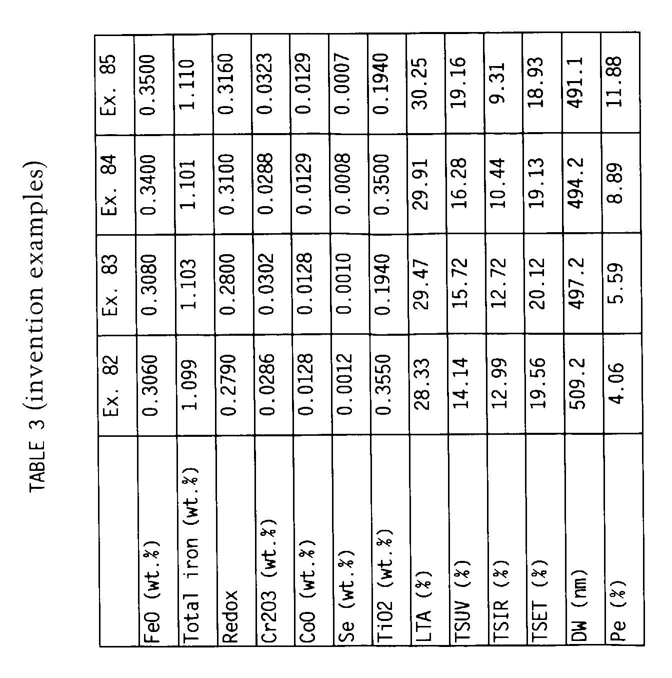

Referring to Tables 2 and 3, the present invention provides a green colored glass using a standard soda-lime-silica glass base composition and additionally iron, cobalt, selenium and chromium, and titanium, as infrared and ultraviolet radiation absorbing materials and colorants. As may be seen, not all of the examples are the same color, as indicated by the dominant wavelength (DW) and excitation purity (Pe). In the present invention, it is preferred that the glass have a color characterized by a dominant wavelength in the range of 480 to 565 nanometers, with an excitation purity of no higher than about 20%, preferably no higher than about 10%, and more preferably no higher than about 7%. It is anticipated that the color of the glass may vary within this dominant wavelength range to provide a desired product. For example, a green blue glass may be produced at a dominant wavelength of 485 to 515 nanometers, preferably 490 to 510 nanometers, with an excitation purity of no higher than 10%, preferably not higher than 7%, while a green yellow glass may be produced at a dominant wavelength of 535 to 565 nanometers, preferably about 540 to 560 nanometers, with an excitation purity of no higher than 10%, preferably not higher than 5%.

The green colored, infrared and ultraviolet radiation absorbing glasses disclosed in the present invention have a luminous transmittance (LTA) of up to 60 percent. In one particular embodiment, the glasses include 0.6 to 4 wt.% total iron, 0.13 to 0.9 wt.% FeO, 40 to 500 PPM CoO, 5 to 70 PPM Se, 15 to 800 PPM Cr₂O₃ and 0.02 to 1 wt.% TiO₂ and 0.01 to 0.32 V₂O₅. The redox ratio for these glasses is maintained between 0.20 to 0.40, preferably between 0.22 to 0.35, more preferably between 0.23 to 0.28. These glass compositions also have a TSUV of no greater than about 40%, preferably no greater than about 35%, a TSIR of no greater than about 45%, preferably no greater than about 40%, and a TSET of no greater than about 50%, preferably no greater than about 45%.

The glass compositions of the present invention may be provided with varying levels of spectral performance, depending on the particular application and desired luminous transmittance. In one embodiment of the invention, for a green colored, infrared and ultraviolet radiation absorbing glass having an LTA of less than 20% at at least one thickness in the range of 1.8 to 5.0 mm. The glass compositions within this luminous transmittance range have a TSUV of no greater than about 30%, preferably no greater than 12%, a TSIR of no greater than about 35%, preferably no greater than about 20%, and a TSET of no greater than about 30%, preferably no greater than about 20%.

In another embodiment of the invention, for a green colored, infrared and ultraviolet radiation absorbing glass having an LTA of less than 20 to 60% at at least one thickness in the range of 1.8 to 5.0 mm, the glass composition includes 1 to less than 1.4 wt.% total iron; 0.25 to 0.4 wt.% FeO; greater than 200 to 250 PPM CoO; 10 to 30 PPM Se; greater than 200 to 250 PPM Cr₂O₃, and 0.02 to 0.5 wt.% TiO₂ and an amount of V₂O₅. The glass compositions within this luminous transmittance range have a TSUV of no greater than 35%, preferably no greater than 20%, a TSIR of no greater than 40%, preferably no greater than 15%, and a TSET of no greater than 45%, preferably, no greater than 25%.

The glass compositions within this luminous transmittance range have a TSUV of no greater than about 35%, a TSIR of no greater than about 40%, and a TSET of no greater than about 45%.

In another embodiment of the invention, the green colored, infrared and ultraviolet radiation absorbing glass composition includes 0.9 to 1.3 wt.% total iron, preferably 1.083 to 1.11 wt.%; 0.25 to 0.40 wt.% FeO, preferably 0.306 to 0.35 wt.%; 80 to 130 PPM CoO, preferably 90 to 128 PPM; 8 to 15 PPM Se, preferably 10 to 12 PPM; 250 to 350 PPM Cr₂O₃, preferably 286 to 302 PPM; and 0.1 to 0.5 wt.% TiO₂, preferably 0.194 to 0.355 wt.%. These glasses have a luminous transmittance (LTA) of 25 to 40 percent, a total solar ultraviolet transmittance (TSUV) of about 25 percent or less, a total solar infrared transmittance (TSIR) of about 20 percent or less and a total solar energy transmittance (TSET) of about 30 percent or less.

It is expected that the spectral properties of the glass compositions disclosed herein will change after tempering the glass and further upon prolonged exposure to ultraviolet radiation, commonly referred to as solarization. In particular, it is believed that tempering and solarization of the glass compositions disclosed herein will increase the LTA and reduce the TSUV, TSIR and TSET. As a result, in one embodiment of the invention, a glass composition may have selected spectral properties that initially fall outside the desired ranges previously discussed but fall within the desired ranges after tempering and/or solarization.

Glass made by the float process typically ranges from a sheet thickness of about 1 millimeters to 10 millimeters. For vehicle glazing applications, it is preferred that the glass sheets having a composition and spectral properties as disclosed herein have a thickness within the range of 1.8 to 5 mm (0.071 to 0.197 inches). It is anticipated that when using a single glass ply, the glass will be tempered, e.g. for an automotive side or rear window, and when multiple plies are used, the glass will be annealed and laminated together using a thermoplastic adhesive, such as polyvinyl butyral.

It is contemplated that vanadium may be used as a partial or complete replacement for the chromium in the glass compositions of the present inventions. More specifically, vanadium, which is expressed herein in terms of V₂O₅, imparts a yellow-green color to the glass and absorbs both ultraviolet and infrared radiation at different valence states. It is believed that Cr₂O₃ in the range of 25 to 800 PPM discussed above may be completely replaced by 0.01 to 0.32 wt.% V₂O₅.

As discussed earlier, other materials may also be added to the glass compositions disclosed herein to further reduce infrared and ultraviolet radiation transmission and/or control glass color. In particular, it is contemplated that the following materials may be added to the iron, cobalt, selenium, chromium and titanium containing soda-lime-silica glass disclosed herein:

| | |
|---|---|
| MnO₂ | 0 to 0.5 wt.% |
| SnO₂ | 0 to 2 wt.% |
| ZnO | 0 to 0.5 wt.% |
| Mo | 0 to 0.015 wt.% |
| CeO₂ | 0 to 2 wt.% |
| NiO | 0 to 0.1 wt.% |

As should be appreciated, adjustments may have to be made to the basic iron, cobalt, selenium, chromium and/or titanium constituents to account for any coloring and/or redox affecting power of these additional materials.

## Claims

1. A green colored, infrared and ultraviolet radiation absorbing glass article having a composition comprising a base glass portion comprising:
| | |
|---|---|
| SiO₂ | 66 to 75 percent by weight, |
| Na₂O | 10 to 20 percent by weight, |
| CaO | 5 to 15 percent by weight, |
| MgO | 0 to 5 percent by weight, |
| Al₂O₃ | 0 to 5 percent by weight, |
| K₂O | 0 to 5 percent by weight, |
and a solar radiation absorbing and colorant portion consisting essentially of:
| | |
|---|---|
| total iron | 0.9 to 1.3 percent by weight, |
| FeO | 0.25 to 0.40 percent by weight, |
| CoO | 80 to 130 PPM, |
| Se | 8 to 15 PPM, |
| Cr₂O₃ | 0.0250 to 0.0350 percent by weight, and |
| TiO₂ | 0.1 to 0.5 percent by weight, |
the glass having a luminous transmittance (LTA) of 25 to 40 percent at at least one thickness in the range of 1.8 to 5.0 mm.

2. A green colored, infrared and ultraviolet radiation absorbing glass article having a composition comprising a base glass portion comprising:
| | |
|---|---|
| SiO₂ | 66 to 75 percent by weight, |
| Na₂O | 10 to 20 percent by weight, |
| CaO | 5 to 15 percent by weight, |
| MgO | 0 to 5 percent by weight, |
| Al₂O₃ | 0 to 5 percent by weight, |
| K₂O | 0 to 5 percent by weight, |
and a solar radiation absorbing and colorant portion comprising Cr₂O₃ in which Cr₂O₃ is partially or completely replaced by V₂O₅ and further components may be present, so that the solar radiation and colorant portion consists essentially of:
| | |
|---|---|
| total iron | 0.6 to 4 percent by weight, |
| FeO | 0.13 to 0.9 percent by weight, |
| CoO | 40 to 500 PPM, |
| Se | 5 to 70 PPM, |
| TiO₂ | 0.02 to 1 percent by weight, |
| Cr₂O₃ | 0 to 0.08 percent by weight, |
| V₂O₅ | 0.01 to 0.32 percent by weight, |
| MnO₂ | 0 to 0.5 percent by weight, |
| SnO₂ | 0 to 2 percent by weight, |
| ZnO | 0 to 0.5 percent by weight, |
| Mo | 0 to 0.015 percent by weight, |
| CeO₂ | 0 to 2 percent by weight, |
| NiO | 0 to 0.1 percent by weight, |
the glass having a luminous transmittance (LTA) of up to 60 percent at at least one thickness in the range of 1.8 to 5.0 mm.

3. The article as in claim 1, wherein the solar radiation absorbing and colorant portion has the following concentrations:
The total iron concentration is from 1.083 to 1.1 weight percent, the FeO concentration is from 0.306 to 0.35 weight percent, the CoO concentration is 90 to 128 PPM, the Se concentration is 10 to 12 PPM, the Cr₂O₃ concentration is 0.0286 to 0.0302 percent by weight, and the TiO₂ concentration is 0.194 to 0.355 weight percent.

4. The article as in claims 1 or 2, wherein the glass has a redox of 0.2 to 0.4.

5. The article as in claim 2, wherein the glass has a luminous transmittance of less than 20 percent at at least one thickness in the range of 1.8 to 5.0 mm.

6. The article as in claim 2, wherein the glass has a luminous transmittance of 20 to 60 percent at at least one thickness in the range of 1.8 to 5.0 mm.

7. The article as in claims 1 to 3, wherein the glass has a total solar ultraviolet transmittance (TSUV) of 40 percent or less, a total solar infrared transmittance (TSIR) of 45 percent or less and a total solar energy transmittance (TSET) of 50 percent or less at at least one thickness between 3.91 mm and 4.06 mm.

8. The article as in claim 3, wherein the glass has a total solar ultraviolet transmittance (TSUV) of 25 percent or less, a total solar infrared transmittance (TSIR) of 20 percent or less and a total solar energy transmittance (TSET) of 30 percent or less at at least one thickness between 3.91 mm and 4.06 mm.

9. The article as in claims 1 to 4, wherein the color of the glass is characterized by a dominant wavelength in the range of 480 to 565 nanometers and an excitation purity of no higher than 20 percent at at least one thickness between 3.91 mm and 4.06 mm.

10. The article as in claim 9 wherein the color of the glass is characterized by a dominant wavelength in the range of 485 to 515 nanometers and an excitation purity of no higher than 10 percent at at least one thickness between 3.91 mm and 4.06 mm.

11. The article as in claim 10, wherein the color of the glass is characterized by a dominant wavelength in the range of 490 to 510 nanometers and an excitation purity of no higher than 7 percent at at least one thickness between 3.91 mm and 4.06 mm.

12. The article as in claim 9, wherein the color of the glass is characterized by a dominant wavelength in the range of 535 to 565 nanometers and an excitation purity of no higher than 10 percent at at least one thickness between 3.91 mm and 4.06 mm.

13. The article as in claim 12, wherein the color of the glass is characterized by a dominant wavelength in the range of 540 to 560 nanometers and an excitation purity of no higher than 5 percent at at least one thickness between 3.91 mm and 4.06 mm.

14. The article as in any of claims 1 to 13 comprising a flat glass sheet.

15. The article as in claim 14, wherein said sheet has traces of tin oxide in a surface portion.

## Patentansprüche

1. Grünes, infrarote und ultraviolette Strahlung absorbierendes Glaserzeugnis mit einer Grundglaszusammensetzung, enthaltend:
| | |
|---|---|
| SiO₂ | 66-75 Gew.-%, |
| Na₂O | 10-20 Gew.-%, |
| CaO | 5-15 Gew.-%, |
| MgO | 0- 5 Gew.-%, |
| Al₂O₃ | 0- 5 Gew.-%, |
| K₂O | 0- 5 Gew.-%, |
und einen Sonnenstrahlen absorbierenden und färbenden Anteil, im wesentlichen bestehend aus:
| | |
|---|---|
| Gesamteisen | 0,9 - 1,3 Gew.-%, |
| FeO | 0,25 - 0,40 Gew.-%, |
| CoO | 80 - 130 ppm, |
| Se | 8 - 15 ppm, |
| Cr₂O₃ | 0,0250-0,0350 Gew.-% und |
| TiO₂ | 0,1 - 0,5 Gew.-%, |
wobei das Glas bei mindestens einer Dicke im Bereich von 1,8-5,0 mm eine Lichtdurchlässigkeit (LTA) von 25-40% aufweist.

2. Grünes, infrarote und ultraviolette Strahlung absorbierendes Glaserzeugnis mit einer Grundglaszusammensetzung, enthaltend:
| | |
|---|---|
| SiO₂ | 66-75 Gew.-%, |
| Na₂O | 10-20 Gew.-%, |
| CaO | 5-15 Gew.-%, |
| MgO | 0- 5 Gew.-%, |
| Al₂O₃ | 0- 5 Gew.-%, |
| K₂O | 0- 5 Gew.-%, |
und einen Sonnenstrahlen absorbierenden und färbenden Anteil, enthaltend Cr₂O₃, wobei Cr₂O₃ teilweise oder vollständig durch V₂O₅ ersetzt ist und weitere Bestandteile vorhanden sein können, so dass der Sonnenstrahlen absorbierende und färbende Anteil im wesentlichen besteht aus:
| | |
|---|---|
| Gesamteisen | 0,6 - 4 Gew.-%, |
| FeO | 0,13 - 0,9 Gew.-%, |
| CoO | 40 - 500 ppm, |
| Se | 5 - 70 ppm, |
| TiO₂ | 0,02 - 1 Gew.-%, |
| Cr₂O₃ | 0 - 0,08 Gew.-%, |
| V₂O₅ | 0,01 - 0,32 Gew.-%, |
| MnO₂ | 0 - 0,5 Gew.-%, |
| SnO₂ | 0 - 2 Gew.-%, |
| ZnO | 0 - 0,5 Gew.-%, |
| Mo | 0 - 0,015 Gew.-%, |
| CeO₂ | 0 - 2 Gew.-%, |
| NiO | 0 - 0,1 Gew.-%, |
wobei das Glas bei mindestens einer Dicke im Bereich von 1,8-5,0 mm eine Lichtdurchlässigkeit (LTA) bis zu 60% aufweist.

3. Erzeugnis nach Anspruch 1, dadurch gekennzeichnet, dass der Sonnenstrahlen absorbierende und färbende Anteil die folgenden Konzentrationen aufweist:
Gesamteisenkonzentration von 1,083 bis 1,1 Gew.-%, FeO-Konzentration von 0,306 bis 0,35 Gew.-%, CoO-Konzentration 90 bis 128 ppm, Se-Konzentration 10 bis 12 ppm, Cr₂O₃-Konzentration 0,0286 bis 0,0302 Gew.-% und TiO₂-Konzentration 0,194 bis 0,355 Gew.-%.

4. Erzeugnis nach Ansprüchen 1 oder 2, dadurch gekennzeichnet, dass das Glas einen Redoxwert von 0,2 bis 0,4 aufweist.

5. Erzeugnis nach Anspruch 2, dadurch gekennzeichnet, dass das Glas bei mindestens einer Dicke im Bereich von 1,8-5,0 mm eine Lichtdurchlässigkeit von weniger als 20% aufweist.

6. Erzeugnis nach Anspruch 2, dadurch gekennzeichnet, dass das Glas bei mindestens einer Dicke im Bereich von 1,8-5,0 mm eine Lichtdurchlässigkeit (LTA) von 20-60% aufweist.

7. Erzeugnis nach einem der Ansprüche 1-3, dadurch gekennzeichnet, dass das Glas eine Gesamtdurchlässigkeit für Sonnen-Ultraviolettstrahlung (TSUV) von 40% oder weniger, eine Gesamtdurchlässigkeit für Sonnen-Infrarotstrahlung (TSIR) von 45% oder weniger und eine Gesamtdurchlässigkeit für Sonnenenergie (TSET) von 50% oder weniger bei mindestens einer Dicke zwischen 3,91 mm und 4,06 mm aufweist.

8. Erzeugnis nach Anspruch 3, dadurch gekennzeichnet, dass das Glas eine Gesamtdurchlässigkeit für Sonnen-Ultraviolettstrahlung (TSUV) von 25% oder weniger, eine Gesamtdurchlässigkeit für Sonnen-Infrarotstrahlung (TSIR) von 20% oder weniger und eine Gesamtdurchlässigkeit für Sonnenenergie (TSET) von 30% oder weniger bei mindestens einer Dicke zwischen 3,91 mm und 4,06 mm aufweist.

9. Erzeugnis nach einem der Ansprüche 1-4, dadurch gekennzeichnet, dass die Farbe des Glases gekennzeichnet ist durch eine farbtongleiche Wellenlänge im Bereich von 480 bis 565 nm und eine Anregungsreinheit von nicht mehr als 20% bei mindestens einer Dicke zwischen 3,91 mm und 4,06 mm.

10. Erzeugnis nach Anspruch 9, dadurch gekennzeichnet, dass die Farbe des Glases gekennzeichnet ist durch eine farbtongleiche Wellenlänge im Bereich von 485 bis 515 nm und eine Anregungsreinheit von nicht mehr als 10% bei mindestens einer Dicke zwischen 3,91 mm und 4,06 mm.

11. Erzeugnis nach Anspruch 10, dadurch gekennzeichnet, dass die Farbe des Glases gekennzeichnet ist durch eine farbtongleiche Wellenlänge im Bereich von 490 bis 510 nm und eine Anregungsreinheit von nicht mehr als 7% bei mindestens einer Dicke zwischen 3,91 mm und 4,06 mm.

12. Erzeugnis nach Anspruch 9, dadurch gekennzeichnet, dass die Farbe des Glases gekennzeichnet ist durch eine farbtongleiche Wellenlänge im Bereich von 535 bis 565 nm und eine Anregungsreinheit von nicht mehr als 10% bei mindestens einer Dicke zwischen 3,91 mm und 4,06 mm.

13. Erzeugnis nach Anspruch 12, dadurch gekennzeichnet, dass die Farbe des Glases gekennzeichnet ist durch eine farbtongleiche Wellenlänge im Bereich von 540 bis 560 nm und eine Anregungsreinheit von nicht mehr als 5% bei mindestens einer Dicke zwischen 3,91 mm und 4,06 mm.

14. Erzeugnis nach einem der Ansprüche 1-13, dadurch gekennzeichnet, dass es eine Flachglasscheibe enthält.

15. Erzeugnis nach Anspruch 14, dadurch gekennzeichnet, dass die Scheibe Spuren von Zinnoxid in einem Oberflächenteil aufweist.

## Revendications

1. Article de verre absorbant les rayonnements infrarouge et ultraviolet, de couleur verte, ayant une composition comprenant une partie de verre de base comprenant :
| | |
|---|---|
| SiO₂ | 66 à 75% en poids, |
| Na₂O | 10 à 20% en poids, |
| CaO | 5 à 15% en poids, |
| MgO | 0 à 5% en poids, |
| Al₂O₃ | 0 à 5% en poids, |
| K₂O | 0 à 5% en poids, |
et une partie absorbant le rayonnement solaire et colorante constituée essentiellement de :
| | |
|---|---|
| fer total | 0,9 à 1,3% en poids, |
| FeO | 0,25 à 0,40% en poids, |
| CoO | 80 à 130 ppm, |
| Se | 8 à 15 ppm, |
| Cr₂O₃ | 0,0250 à 0,0350% en poids, et |
| TiO₂ | 0,1 à 0,5% en poids, |
le verre ayant une transmission lumineuse (TAL) de 25 à 40% à au moins une épaisseur allant de 1,8 à 5,0 mm.

2. Article de verre absorbant les rayonnements infrarouge et ultraviolet, de couleur verte, ayant une composition comprenant une partie de verre de base comprenant :
| | |
|---|---|
| SiO₂ | 66 à 75% en poids, |
| Na₂O | 10 à 20% en poids, |
| CaO | 5 à 15% en poids, |
| MgO | 0 à 5% en poids, |
| Al₂O₃ | 0 à 5% en poids, |
| K₂O | 0 à 5% en poids, |
et une partie absorbant le rayonnement solaire et colorante comprenant du Cr₂O₃, dans laquelle le Cr₂O₃ est partiellement ou complètement remplacé par du V₂O₅ et dans laquelle d'autres composants peuvent être présents, de telle sorte que la partie absorbant le rayonnement solaire et colorante se compose essentiellement de :
| | |
|---|---|
| fer total | 0,6 à 4% en poids, |
| FeO | 0,13 à 0,9% en poids, |
| CoO | 40 à 500 ppm, |
| Se | 5 à 70 ppm, |
| TiO₂ | 0,02 à 1% en poids, |
| Cr₂O₃ | 0 à 0,08% en poids, |
| V₂O₅ | 0,01 à 0,32% en poids, |
| MnO₂ | 0 à 0,5% en poids, |
| SnO₂ | 0 à 2% en poids, |
| ZnO | 0 à 0,5% en poids, |
| Mo | 0 à 0,015% en poids, |
| CeO₂ | 0 à 2% en poids, |
| NiO | 0 à 0,1% en poids, |
le verre ayant une transmission lumineuse (TAL) pouvant atteindre 60% à au moins une épaisseur allant de 1,8 à 5,0 mm.

3. Article suivant la revendication 1, dans lequel la partie absorbant le rayonnement solaire et colorante a les concentrations suivantes :
la concentration en fer total est de 1,083 à 1,1% en poids, la concentration en FeO est de 0,306 à 0,35% en poids, la concentration en CoO est de 90 à 128 ppm, la concentration en Se est de 10 à 12 ppm, la concentration en Cr₂O₃ est de 0,0286 à 0,0302% en poids et la concentration en TiO₂ est de 0,194 à 0,355% en poids.

4. Article suivant l'une ou l'autre des revendications 1 et 2, dans lequel le verre a un redox de 0,2 à 0,4.

5. Article suivant la revendication 2, dans lequel le verre a une transmission lumineuse inférieure à 20% à au moins une épaisseur allant de 1,8 à 5,0 mm.

6. Article suivant la revendication 2, dans lequel le verre a une transmission lumineuse de 20 à 60% à au moins une épaisseur allant de 1,8 à 5,0 mm.

7. Article suivant l'une quelconque des revendications 1 à 3, dans lequel le verre a une transmission ultraviolette solaire totale (TUVS) de 40% ou moins, une transmission infrarouge solaire totale (TIRS) de 45% ou moins et une transmission d'énergie solaire totale (TEST) de 50% ou moins à au moins une épaisseur entre 3,91 mm et 4,06 mm.

8. Article suivant la revendication 3, dans lequel le verre a une transmission ultraviolette solaire totale (TUVS) de 25% ou moins, une transmission infrarouge solaire totale (TIRS) de 20% ou moins et une transmission d'énergie solaire totale (TEST) de 30% ou moins à au moins une épaisseur entre 3,91 mm et 4,06 mm.

9. Article suivant l'une quelconque des revendications 1 à 4, dans lequel la couleur du verre est caractérisée par une longueur d'onde dominante dans la gamme de 480 à 565 nanomètres et une pureté d'excitation de pas plus de 20% à au moins une épaisseur entre 3,91 mm et 4,06 mm.

10. Article suivant la revendication 9, dans lequel la couleur du verre est caractérisée par une longueur d'onde dominante dans la gamme de 485 à 515 nanomètres et une pureté d'excitation de pas plus de 10% à au moins une épaisseur entre 3,91 mm et 4,06 mm.

11. Article suivant la revendication 10, dans lequel la couleur du verre est caractérisée par une longueur d'onde dominante dans la gamme de 490 à 510 nanomètres et une pureté d'excitation de pas plus de 7% à au moins une épaisseur entre 3,91 mm et 4,06 mm.

12. Article suivant la revendication 9, dans lequel la couleur du verre est caractérisée par une longueur d'onde dominante dans la gamme de 535 à 565 nanomètres et une pureté d'excitation de pas plus de 10% à au moins une épaisseur entre 3,91 mm et 4,06 mm.

13. Article suivant la revendication 12, dans lequel la couleur du verre est caractérisée par une longueur d'onde dominante dans la gamme de 540 à 560 nanomètres et une pureté d'excitation de pas plus de 5% à au moins une épaisseur entre 3,91 mm et 4,06 mm.

14. Article suivant l'une quelconque des revendications 1 à 13, comprenant une feuille de verre plat.

15. Article suivant la revendication 14, dans lequel ladite feuille présente des traces d'oxyde d'étain dans une partie de surface.
